# EUROPÄISCHE PATENTSCHRIFT

(11) **EP 2 578 335 B1**
(45) Veröffentlichungstag und Bekanntmachung des Hinweises auf die Patenterteilung: **14.02.2018**
(21) Anmeldenummer: 11184322.3
(22) Anmeldetag: 07.10.2011
(51) Int. Cl.: B22D 18/08, B22D 46/00, G01M 11/08, G01N 21/00

(54) **Verfahren zur Steuerung einer Giessprozessvorrichtung**
Method for controlling a casting process device
Procédé de commande d'un dispositif de processus de coulée

(43) Veröffentlichungstag der Anmeldung: 10.04.2013
(73) Patentinhaber: Nemak, S.A.B. de C.V., 66000 García, Nuevo León (MX)
(72) Erfinder: Schickmair, Martin Dr., 4511 Allhaming (AT); Gröschel, Andre, 4491 Niederneukirchen (AT)
(74) Vertreter: Cohausz & Florack

(56) Entgegenhaltungen:
- EP-A1- 0 618 026
- EP-A2- 1 717 754
- DE-A1- 10 351 925
- DE-A1-102007 031 654
- US-B1- 6 776 212
- MERY D ET AL: "AUTOMATISCHE GUSSFEHLERERKENNUNG: STAND DER TECHNIK//AUTOMATED QUALITY CONTROL OF CASTINGS: STATE OF THE ART", TECHNISCHES MESSEN TM, R.OLDENBOURG VERLAG. MUNCHEN, DE, Bd. 68, Nr. 7/08, 1. Juli 2001 (2001-07-01), Seiten 338-349, XP008050825, ISSN: 0171-8096
- SILLEN ET AL: "Prozessverbesserungen im Giessereibetrieb durch Einsatz von Expertensystemen und anderen auf kuenstlicher Intelligenz basierender Technologien", GIESSEREI, GIESSEREI VERLAG, DUSSELDORF, DE, vol. 89, no. 9, 1 January 2002 (2002-01-01), pages 39-45, XP009174682, ISSN: 0016-9765
- RANSING R S ET AL: "Optimierung von Giessereiprozessen", GIESSEREI, GIESSEREI VERLAG, DUSSELDORF, DE, vol. 90, no. 6, 1 January 2003 (2003-01-01), pages 36-42, XP009174697, ISSN: 0016-9765
- LAMPIC M: "GIFA94: Kuenstliche Intelligenz (Expertensysteme) fuer die Giesserei", GIESSEREI, GIESSEREI VERLAG, DUSSELDORF, DE, vol. 81, no. 17, 1 January 1994 (1994-01-01), pages 578-579, XP009174681, ISSN: 0016-9765

## Beschreibung

Die Erfindung betrifft ein Verfahren zum Steuern mindestens einer Gießprozessvorrichtung. Darüber hinaus betrifft die Erfindung ein Gießanlagensystem, ein Computerprogramm und ein Computerprogrammprodukt.

Motorenbauteile aber auch andere Bauteile werden heutzutage in Gießanlagesystemen umfassend mindestens eine Gießprozessvorrichtung, insbesondere eine Gießanlage, durch einen Gießprozess hergestellt. Beim Gießprozess entsteht dabei aus einem flüssigen Werkstoff nachdem der Werkstoff erstarrt ist ein fester Körper mit einer bestimmten Form. Ein stetiges Anliegen beim Gießprozess ist es, die Anzahl der fehlerhaften Bauteile, also den Ausschuss, zu reduzieren und die Gießleistung zu steigern.

Zur Reduzierung der Ausschussrate ist es aus dem Stand der Technik bekannt, bei jeder Gießprozessvorrichtung, insbesondere jeder Gießanlage, die fehlerhaften Bauteile durch Mitarbeiter untersuchen zu lassen, um die Ursache für den Ausschuss zu ermitteln. Hierbei analysiert ein Mitarbeiter das Fehlerbild des fehlerhaften Bauteils, um die Ursache des Fehlers zu bestimmen. Auf Grundlage dieser Analyse werden dann geeignete Maßnahmen abgeleitet und beispielsweise die Steuerparameter der entsprechenden Gießanlage angepasst.

Die Analyse der fehlerhaften Bauteile und die Ableitung geeigneter Maßnahmen sind jedoch sehr aufwendig und schwierig. Einer der Gründe hierfür ist, dass der Gießprozess durch mehrere nicht konstante und nicht oder nur begrenzt beeinflussbare Faktoren beeinflusst wird. Hierzu zählt beispielsweise die Umgebungstemperatur der Gießanlage oder die Temperatur der eingesetzten Werkstoffe.

Ferner müssen in der Regel mehrere Mitarbeiter für die Analyse und die anschließende Bestimmung der Steuerparameter auf Grundlage dieser Analyse abgestellt werden, da diese Aufgaben wiederholend durchgeführt werden müssen und einen entsprechenden Aufwand mit sich bringen. Ferner nimmt die Analyse und die Ableitung von Steuerparametern aus der Analyse eine lange Zeitdauer in Anspruch. Dies hat einen Zeitversatz zwischen dem Auftreten des Fehlers und dem Beheben des Fehlers zur Folge. In dieser Zeit erhöht sich jedoch die Ausschussrate, so dass ggf. eine Abschaltung der Gießanlage bis zur Behebung der Ursache erforderlich ist. Schließlich treten aufgrund des menschlichen Einflusses regelmäßig Analysefehler auf.

Die DE 10 2007 031 654 A1 offenbart ferner ein Verfahren zur Herstellung von Druckgießteilen und eine Gießeinrichtung, bei dem/der eine Qualitätsprüfung der hergestellten Bauteile durch eine optische Prüfung mit einer Inline-Bildverarbeitung erfolgt.

Aus den Dokumenten SILLEN ET AL: "Prozessverbesserungen im Gießereibetrieb durch Einsatz von Expertensystemen und anderen auf kuenstlicher Intelligenz basierender Technologien", GIESSEREI, GIESSEREI VERLAG, DUSSELDORF, DE, Bd. 89, Nr. 9, 1. Januar 2002 (2002-01-01), Seiten 39-45, RANSING R S ET AL: "Optimierung von Giessereiprozessen", GIESSEREI, GIESSEREI VERLAG, DUSSELDORF, DE, Bd. 90, Nr. 6,1. Januar 2003 (2003-01-01), Seiten 36-42, und LAMPIC M: "GIFA94: Kuenstliche Intelligenz (Expertensysteme) fuer die Giesserei", GIESSEREI, GIESSEREI VERLAG, DUSSELDORF, DE, Bd. 81, Nr.17,1. Januar 1994 (1994-01-01), Seiten 578-579, sind allgemein Expertensysteme in Form von Softwarelösungen bekannt, welche in der Gießerei eingesetzt werden können.

Es ist daher die Aufgabe der vorliegenden Erfindung, ein Verfahren zur Steuerung mindestens einer Gießanlage, zur Verfügung zu stellen, welches die Ausschussrate zumindest reduziert. Eine weitere Aufgabe der vorliegenden Erfindung ist es, ein Verfahren zur Steuerung mindestens einer Gießanlage, zur Verfügung zu stellen, welches die Gießleistung verbessert.

Die zuvor hergeleitete und aufgezeigte Aufgabe wird gemäß einem ersten Aspekt der Erfindung durch ein Verfahren zum Steuern mindestens einer Gießanlage nach Anspruch 1 und gemäß einem weiteren Aspekt durch ein Gießanlagensystem gemäß Anspruch 9 gelöst.

Während eines Gießprozesses wird eine Vielzahl von Bauteilen hergestellt. Das Verfahren umfasst Bereitstellen einer Vielzahl von Messwerten von mindestens einem Produktionsparameter des Gießprozesses in einer Datenbank, Überprüfen der hergestellten Vielzahl von Bauteilen, wobei mindestens ein Fehlerparameter eines Fehlerbilds eines fehlerhaften Bauteils erfasst wird, und Ableiten mindestens eines Steuerparameters zum Steuern der mindestens einen Gießprozessvorrichtung aus dem mindestens einen Fehlerparameter und der bereitgestellten Vielzahl von Messwerten von dem mindestens einen Produktionsparameter.

Im Gegensatz zum Stand der Technik wird erfindungsgemäß durch die Speicherung einer Vielzahl von Messwerten eines Produktionsparameters in einer Datenbank und dem Verwenden dieser Daten für eine bevorzugt automatische Ableitung von mindestens einem Steuerparameter zumindest bei Detektion eines fehlerhaften Bauteils eine zeitnahe Anpassung der Steuerung und eine entsprechende Reduzierung der Ausschussrate erzielt.

Unter einer Gießprozessvorrichtung ist vorliegend insbesondere eine Vorrichtung bzw. ein Werkzeug zu verstehen, welche/s während des Gießprozesses verwendet wird. Neben der Gießanlage sind unter einer Gießprozessvorrichtung Vorrichtungen zu verstehen, welche zur Vorbehandlung der eingesetzten Materialien und/oder Nachbehandlung des gegossenen Bauteils eingesetzt werden. Beispielhafte Vorrichtungen sind Kernschießmaschinen, Strahlanlagen, Rütteleinrichtungen, Sägen, CNC-Bearbeitungsmaschinen, Ofenanlagen, Prüf- und Messmaschinen oder Transport-Logistik- Automatisierungs- und Manipulationszellen.

Zunächst können in einer Datenbank aktuelle und/oder historische Messwerte mindestens eines Produktionsparameters, also eines den Produktionsprozess bzw. Gießprozess beeinflussenden Parameters bzw. Faktors bereitgestellt werden.

Ferner wird bevorzugt automatisch eine Überprüfung sämtlicher hergestellter Bauteile durchgeführt. Grundsätzlich ist auch eine stichprobenartige Überprüfung der hergestellten Bauteile denkbar. Wird bei der Überprüfung ein fehlerhaftes Bauteil detektiert, so kann dieses genauer untersucht werden. Insbesondere kann das Fehlerbild erfasst werden. Mindestens ein Fehlerparameter des Fehlerbilds wird dazu erfasst.

Um geeignete Maßnahmen zur Beseitigung bzw. Vermeidung von fehlerhaften Bauteilen in einfacher Weise abzuleiten, ist erfindungsgemäß vorgesehen, bevorzugt automatisch aus den gespeicherten Messwerten des mindestens einen Produktionsparameters und dem mindestens einen Fehlerparameter einen oder mehrere Steuerparameter abzuleiten. Insbesondere aus der gespeicherten Vielzahl an Messwerten von mindestens einem vorgebbaren Produktionsparameters, der z.B. aufgrund von Tests besonders geeignet ist, kann mindestens ein Steuerparameter abgeleitet werden. Der mindestens eine Steuerparameter kann vorzugsweise von einer Steuereinrichtung der Gießprozessvorrichtung, insbesondere der Gießanlage, automatisch umgesetzt werden.

Eine zeitnahe, einfache und insbesondere automatische Anpassung der Steuerparameter ist möglich. Eine Ausschussrate kann reduziert werden. Ferner kann die Gießleistung verbessert werden.

Gemäß einer ersten Ausführungsform des erfindungsgemäßen Verfahrens kann der mindestens eine erfasste Fehlerparameter in der Datenbank gespeichert werden. Der gespeicherte Fehlerparameter kann dann für die Analyse und insbesondere zur Ableitung von mindestens einem Steuerparameter zusätzlich berücksichtigt werden. Wenn beispielsweise ein Fehlerparameter mit einem zuvor gespeicherten Fehlerparameter übereinstimmt, kann dies die Ableitung von mindestens einem geeigneten Steuerparameter erleichtern.

Grundsätzlich können die bereitgestellten Messwerte eines Produktionsparameters in beliebiger Form ermittelt werden. Gemäß einer bevorzugten Ausführungsform des erfindungsgemäßen Verfahrens kann die Vielzahl von Messwerten von dem mindestens einen Produktionsparameter während des Gießprozesses erfasst werden. Insbesondere kann eine Echtzeiterfassung vorgesehen sein. Die erfassten Werte können in der Datenbank gespeichert werden. Hierdurch kann eine besonders exakte, umfassende und stets aktuelle Überwachung des mindestens einen Produktionsparameters sichergestellt werden. Beispielsweise können die Messwerte periodisch oder kontinuierlich erfasst werden.

Darüber hinaus können gemäß einer weiteren Ausführungsform des Verfahrens gemäß der Erfindung eine Vielzahl von Messwerten von mindestens einem weiteren Produktionsparameter des Gießprozesses in der Datenbank bereitgestellt werden. Durch die Bereitstellung mindestens eines weiteren Produktionsparameters, vorzugsweise einer Vielzahl von Produktionsparametern, kann eine genauere Auswertung vorgenommen und eine besonders gute Anpassung des mindestens einen Steuerparameters erzielt werden. Insbesondere können die Messwerte einer Vielzahl an Produktionsparametern in Echtzeit erfasst werden, um besonders genaue Informationen über den Produktionsprozess zu erzielen. Sämtliche Information können in der Datenbank dann abgespeichert werden.

Alternativ oder zusätzlich kann mindestens ein weiterer Fehlerparameter erfasst werden. Durch die Erfassung eines weiteren Fehlerparameters kann ein genaueres Fehlerbild erfasst werden. Mittels eines exakteren Fehlerbilds kann die Ableitung des mindestens einen Steuerparameters verbessert werden.

Der mindestens eine Produktionsparameter kann grundsätzlich jeder Parameter bzw. Faktor sein, der unmittelbar oder mittelbar einen Einfluss auf den Gießprozess ausübt. Beispielsweise kann der Produktionsparameter ein Steuerparameter und/oder ein den Gießprozess beeinflussender Umgebungsparameter sein. Gemäß einer weiteren Ausführungsform des erfindungsgemäßen Verfahrens kann der mindestens eine Produktionsparameter ein Drehparameter, ein Zeitparameter, ein Kühlleistungsparameter, ein Heizleistungsparameter, eine Umgebungstemperatur, eine Gießanlagentemperatur, eine Kerntemperatur, eine Werkstofftemperatur oder ein Zustandsparameter der Gießprozessvorrichtung, insbesondere der Gießanlage, sein. Bevorzugt können zwei oder mehr, insbesondere sämtliche diese Produktionsparameter bereitgestellt und z.B. erfasst werden. Ein Zeitparameter ist beispielsweise eine Taktzeit oder eine Erstarrungszeit. Ein Zustandsparameter der Gießanlage kann beispielsweise eine Störung einer Komponente der Gießanlage oder eine Abnutzung sein. In Abhängigkeit dieser Produktionsparameter kann ein Steuerparameter besonders exakt angepasst werden.

Zusätzlich oder alternativ kann der mindestens eine Fehlerparameter eine Fehlerart, eine Fehlerposition oder eine Fehlergröße sein. Um ein möglichst vollständiges Fehlerbild zu erhalten, können bevorzugt sämtliche Fehlerparameter erfasst werden. Beispielhafte Fehlerarten sind Lunker, Risse, fehlerhafte Klebestellen, Kaltlauf, ein Fremdeinschlüsse, sandige oder undichte Stellen. Es versteht sich, dass auch diese Fehlerarten weiter unterteilt werden können. Ferner können aus der Größe des Fehlers und/oder der Position des Fehlers Rückschlüsse auf die Ursache des Fehlers geschlossen werden.

Darüber hinaus ist gemäß einer weiteren Ausführungsform der vorliegenden Erfindung vorgesehen, dass der mindestens eine Steuerparameter zumindest bei Erfassung eines Fehlerparameters durch eine statistische Überprüfung der Vielzahl an in der Datenbank abgespeicherten Messwerten von dem mindestens einen Produktionsparameter abgeleitet wird. Beispielsweise kann die Datenbank, in der sämtliche Werte von bevorzugt einer Vielzahl von Produktionsparametern gespeichert sein können, nach statistischen Auffälligkeiten durchsucht werden. Aus einer statistischen Auffälligkeit kann dann mindestens ein Steuerparameter (automatisch) abgeleitet werden.

Gemäß einer bevorzugten Ausführungsform des erfindungsgemäßen Verfahrens kann bei der statistischen Überprüfung nach einer Abweichung der gespeicherten Messwerte von dem mindestens einen Produktionsparameter während der Herstellung des fehlerhaften Bauteils im Vergleich zu den gespeicherten Messwerten von dem mindestens einen Produktionsparameter während der Herstellung von fehlerfreien Bauteilen gesucht werden. Eine Abweichung kann mindestens ein erhöhter, reduzierter oder geänderter Messwert eines oder mehrerer Produktionsparameter sein. Für den Fall, dass unterschiedliche Produktionsparameter erfasst worden sind, kann die Abweichung auch darin liegen, dass die Messwerte beispielsweise zweier Produktionsparameter zwar für sich genommen keine Abweichungen aufweisen, jedoch die Kombination der Messwerte eine Abweichung darstellt. In einfacher und schneller Weise kann bevorzugt vollkommen automatisch eine Anpassung des mindestens einen Steuerparameters durchgeführt werden.

Darüber hinaus kann gemäß einer weiteren Ausführungsform eine Korrelation zwischen einer erfassten Abweichung und dem mindestens einen Fehlerparameter in der Datenbank gespeichert werden. Beispielsweise kann bei Erfassung des identischen Fehlerparameters aus der gespeicherten Korrelation automatisch eine Anpassung des mindestens einen Steuerparameters abgeleitet werden.

In einer weiteren Ausführungsform des erfindungsgemäßen Verfahrens können Fehlerbildkategorien vorgegeben werden, und
die Häufigkeit eines auftretenden Fehlerbilds einer Fehlerbildkategorie in der Datenbank gespeichert werden. Häufigkeiten bestimmter Fehlerparameter eignen sich für die Bestimmung von mindestens einem angepassten Steuerparameter besonders.

Ferner kann gemäß einer weiteren Ausführungsform des Verfahrens gemäß der Erfindung vorgesehen sein, dass mit dem Verfahren mindestens eine weitere Gießprozessvorrichtung, insbesondere eine weitere Gießanlage, gesteuert wird, wobei in der Datenbank eine Vielzahl von Messwerten von mindestens einem Produktionsparameter des Gießprozesses der weiteren Gießprozessvorrichtung bereitgestellt wird, wobei die durch die weitere Gießprozessvorrichtung hergestellten Bauteile überprüft werden, wobei mindestens ein Fehlerparameter eines Fehlerbilds eines fehlerhaften Bauteils erfasst wird und wobei mindestens ein Steuerparameter zum Steuern mindestens einer der zwei Gießprozessvorrichtungen aus dem mindestens einen Fehlerparameter und der bereitgestellten Vielzahl von Messwerten abgeleitet wird.

Insbesondere können eine Vielzahl von Messwerten von mindestens einem Produktionsparameter von jeder der zwei Gießprozessvorrichtungen, insbesondere von zwei Gießanlagen, bereitgestellt werden. Die Messwerte von Produktionsparametern von jeder der zwei Gießanlagen können zentral in einer zentralen Datenbank bereitgestellt werden. Bei den Produktionsparametern kann es sich um gleiche oder unterschiedliche Produktionsparameter handeln.

Darüber hinaus können die hergestellten Bauteile der ersten und der weiteren Gießprozessvorrichtung, insbesondere Gießanlage, überwacht und bei Detektion eines fehlerhaften Bauteils mindestens ein Fehlerparameter erfasst werden. Aus den zentral gespeicherten Messwerten und dem mindestens einen Fehlerparameter können dann mindestens ein Steuerparameter (nur) für eine Gießanlage und/oder für beide Gießanlagen abgeleitet werden. Insbesondere erlaubt die zentrale Ableitung des Steuerparameters, dass sämtliche Gießanlagen entsprechend angesteuert werden können. Es versteht sich, dass mehr wie zwei Gießanlagen vorgesehen sein können.

Die Aufgabe wird gemäß einem weiteren Aspekt erfindungsgemäß durch ein Gießanlagensystem gelöst. Das Gießanlagensystem umfasst mindestens eine Gießprozessvorrichtung, wie eine Gießanlage, zur Durchführung eines Gießprozesses, mindestens eine Datenbank zum Bereitstellen einer Vielzahl von Messwerten von mindestens einem Produktionsparameter des Gießprozesses, mindestens eine erste Erfassungseinrichtung zum Überprüfen einer Vielzahl von hergestellten Bauteilen, wobei mindestens ein Fehlerparameter eines Fehlerbilds von mindestens einem fehlerhaften Bauteil erfassbar ist und eine Datenverarbeitungseinrichtung zum Ableiten mindestens eines Steuerparameters zum Steuern der mindestens einen Gießprozessvorrichtung aus dem mindestens einen Fehlerparameter und der Vielzahl von Messwerten von dem mindestens einen Produktionsparameter.

Das erfindungsgemäße Gießanlagensystem eignet sich insbesondere zur Durchführung des zuvor beschriebenen Verfahrens.

Eine Erfassungseinrichtung kann ein geeignetes Erfassungsmittel, wie einen Sensor, aufweisen. Der Sensor kann derart konfiguriert sein, dass ein Fehlerparameter erfasst werden kann. Es versteht sich, dass ein Sensor zur Erfassung unterschiedlicher Fehlerparameter vorgesehen sein kann als auch eine Erfassungseinrichtung mehrere Sensoren aufweisen kann.

Die Datenbank kann gespeicherte Messwerte des Produktionsparameters bereitstellen. Die Datenbank kann insbesondere mit einer Datenverarbeitungseinrichtung gekoppelt oder von dieser umfasst sein. Beispielsweise kann ein Fehlerparameter zunächst an die Datenverarbeitungseinrichtung zur weiteren Verarbeitung übertragen werden.

Bei der Datenverarbeitungseinrichtung kann es sich um einen Computer oder ein Computersystem handeln. Die Datenverarbeitungseinrichtung kann Prozessormittel, Speichermittel, Schnittstellen und dergleichen aufweisen. Insbesondere kann die Datenverarbeitungseinrichtung derart konfiguriert sein, dass mindestens ein Steuerparameter aus den gespeicherten Messwerten und dem mindestens einen Fehlerparameter angepasst bzw. abgeleitet werden kann. Es versteht sich, dass mehr als nur ein Steuerparameter geändert werden kann. Der mindestens eine Steuerparameter kann von einer Steuereinrichtung direkt umgesetzt und die Gießprozessvorrichtung, insbesondere die Gießanlage, entsprechend angesteuert werden.

Eine zeitnahe, einfache und insbesondere automatische Anpassung der Steuerparameter ist möglich. Eine Ausschussrate kann reduziert werden. Die Gießleistung kann verbessert werden.

Gemäß einer ersten Ausführungsform des erfindungsgemäßen Gießanlagensystems kann mindestens eine zweite Erfassungseinrichtung zum Erfassen der bereitgestellten Vielzahl von Messwerten von dem mindestens einen Produktionsparameter des Gießprozesses vorgesehen sein. Die Erfassungseinrichtung kann ein geeignetes Erfassungsmittel, wie einen Sensor, aufweisen. Der Sensor ist insbesondere derart konfiguriert, dass Messwerte von mindestens einem Produktionsparameter erfasst werden können.

Gemäß einer weiteren Ausführungsform des erfindungsgemäßen Gießanlagensystems kann mindestens eine weitere Gießprozessvorrichtung, insbesondere eine weitere Gießanlage, vorgesehen sein, wobei in der Datenbank eine Vielzahl von Messwerten von mindestens einem Produktionsparameter des Gießprozesses der weiteren Gießprozessvorrichtung, insbesondere der weiteren Gießanlage, bereitgestellt wird, wobei mindestens eine weitere erste Erfassungseinrichtung zum Überprüfen einer Vielzahl von durch die weitere Gießprozessvorrichtung, insbesondere Gießanlage, hergestellten Bauteilen vorgesehen ist, wobei mindestens ein Fehlerparameter eines Fehlerbilds von mindestens einem fehlerhaften Bauteil erfassbar ist und wobei die Datenverarbeitungseinrichtung als eine zentrale Datenverarbeitungseinrichtung konfiguriert ist, derart, dass mindestens ein Steuerparameter zum Steuern mindestens einer der zwei Gießprozessvorrichtungen, insbesondere Gießanlagen, aus dem mindestens einen Fehlerparameter und der bereitgestellten Vielzahl von Messwerten abgeleitet wird.

Gemäß einer weiteren Ausführungsform des Gießanlagensystems gemäß der Erfindung kann die Datenbank zur Echtzeit-Speicherung der erfassten Vielzahl von Messwerten von dem mindestens einen Produktionsparameter konfiguriert sein. Eine Echtzeit- oder Live-Speicherung bringt den Vorteil mit sich, dass eine besonders zeitnahe optimale Bestimmung der Steuerparameter möglich ist.

Gemäß einem weiteren Aspekt wird die Aufgabe erfindungsgemäß gelöst durch ein Computerprogramm mit Instruktionen ausführbar auf einem Prozessor derart, dass mindestens ein Gießanlagensystem mittels des zuvor beschriebenen Verfahrens gesteuert wird.

Gemäß einem weiteren Aspekt wird die Aufgabe erfindungsgemäß gelöst durch ein Computerprogrammprodukt umfassend ein Computerprogramm mit Instruktionen ausführbar auf einem Prozessor derart, dass mindestens ein Gießanlagensystem mittels des zuvor beschriebenen Verfahrens gesteuert wird.

Es gibt nun eine Vielzahl von Möglichkeiten, das erfindungsgemäße Verfahrens zum Steuern mindestens einer Gießprozessvorrichtung, insbesondere Gießanlage, das erfindungsgemäße Gießanlagensystem, das erfindungsgemäße Computerprogramm und das erfindungsgemäße Computerprogrammprodukt auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Gießanlagensystems gemäß der vorliegenden Erfindung;
- Fig. 2: ein Flussdiagramm eines Ausführungsbeispiels eines Verfahrens zum Steuern mindestens einer Gießanlage gemäß der vorliegenden Erfindung;
- Fig. 3: eine schematische Ansicht eines zweiten Ausführungsbeispiels eines Gießanlagensystems gemäß der vorliegenden Erfindung.

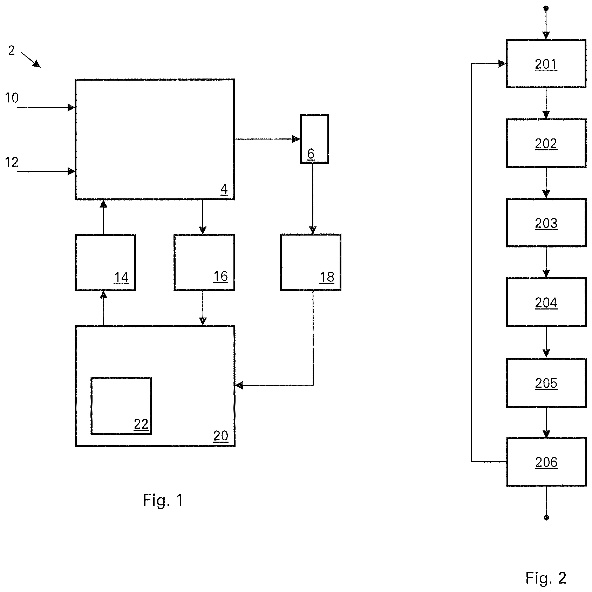

Figur 1 zeigt eine schematische Ansicht eines ersten Ausführungsbeispiels eines Gießanlagensystems 2 gemäß der vorliegenden Erfindung.

Das Gießanlagensystem 2 umfasst eine Gießprozessvorrichtung 4 in Form einer Gießanlage 4 zur Herstellung von Bauteilen 6. Beispielsweise können Motorteile gegossen werden. Hierzu wird ein flüssiger Werkstoff 10, wie ein flüssiges Metall, zur Verfügung gestellt. Um Bauteile mit Hohlräumen herzustellen, können darüber hinaus Formstoffe 12 zur Verfügung gestellt werden. Mit den Formstoffen können beispielsweise Kerne gebildet werden, um spätere Hohlräume in den Bauteilen 6 zu erzeugen. Als Materialien für einen Kern kommen beispielsweise geeignete Sande zum Einsatz.

Es versteht sich, dass weitere Gießprozessvorrichtungen zur Vor- und Nachbehandlung vorgesehen sein können.

Darüber hinaus weist das Gießanlagensystem 2 eine Steuereinrichtung 14 auf. Die Steuereinrichtung 14 ist konfiguriert, um die Gießanlage 4 bzw. den Gießprozess zu steuern. Die Steuereinrichtung 14 kann geeignete Verarbeitungsmittel aufweisen, um verschiedene Steuerparameter vorzugeben. Beispielsweise können Kühlparameter, Heizparameter zur Heizung von Formpartien der Werkzeugform und/oder geeignete Anschnitt- und Speiseparameter vorgegeben werden.

Neben der Steuereinrichtung 14 sind zwei Erfassungseinrichtungen 16 und 18 vorgesehen.
Es versteht sich, dass die Erfassungseinrichtungen 16 und 18 auch als eine Komponente oder durch drei oder mehr Komponenten gebildet sein können.

Die erste Erfassungseinrichtung 18 ist konfiguriert, um bauteilbezogene Parameter der hergestellten Bauteile 6 zu erfassen. Insbesondere kann die Erfassungseinrichtung 18 die hergestellten Bauteile 6 überprüfen und fehlerhafte Bauteile 6 erfassen. Beispielsweise kann die Erfassungseinrichtung 18 mindestens einen geeigneten Sensor, wie einen optischen Sensor, einen Gewichtssensor, einen elektromagnetischen Sensor, etc., aufweisen. Anstatt einer automatischen Überprüfung ist grundsätzlich eine manuelle Überprüfung der Bauteile 6 alternativ oder zusätzlich möglich. In diesem Fall können die Ergebnisse beispielsweise mittels geeigneter Schnittstellen in eine Datenverarbeitungseinrichtung eingegeben werden.

Bevorzugt kann jedoch die Erfassungseinrichtung 18 insbesondere mittels einer Vielzahl an Sensoren fehlerhafte Bauteile 6 automatisch erkennen. Neben der Erkennung eines fehlerhaften Bauteils 6 kann auch das Fehlerbild von der Erfassungseinrichtung 18 erfasst werden. Die Erfassungseinrichtung 18 ist derart konfiguriert, dass mindestens ein Fehlerparameter, wie die Fehlerart und/oder die Fehlerposition und/oder die Fehlergröße erfasst wird. Beispielhafte Fehlerarten sind ein Lunker, ein Riss, eine fehlerhafte Klebestelle, ein Kaltlauf, ein Fremdeinschluss, oder sandiges oder undichtes Bauteil 6. Die verschiedenen Fehlerarten können in verschiedenen Größen und an verschiedenen Positionen des Bauteils 6 auftreten. Ferner versteht es sich, dass zwei oder mehr Fehler gleichzeitig auftreten und erfasst werden können.

Der mindestens eine erfasste Fehlerparameter, bevorzugt werden sämtliche Fehlerparameter erfasst, kann über geeignete Kanäle an eine Datenverarbeitungseinrichtung 20 übergeben werden.

Die darüber hinaus vorgesehene zweite optionale Erfassungseinrichtung 16 ist konfiguriert, um eine Vielzahl von Messwerten von mindestens einem Produktionsparameter des Gießprozesses zu erfassen. Die Erfassungseinrichtung 16 kann zumindest einen geeigneten Sensor aufweisen, wie einen Temperaturfühler, einen Zeitmesser, einen optischen Sensor oder dergleichen. Produktionsparameter sind Parameter, die den Gießprozess beeinflussen. Neben den Steuerparametern gehören auch andere den Gießprozess beeinflussende Umgebungsparameter hierzu. Beispielhafte erfassbare Produktionsparameter sind ein Drehparameter oder ein Zeitparameter, wie die Erstarrungszeit, die Taktzeit, der Gießzeitpunkt, oder ein Kühlleistungsparameter, eine Umgebungstemperatur, eine Gießanlagentemperatur, eine Kerntemperatur, eine Werkstofftemperatur oder eine Störung der Gießanlage.

Vorzugsweise werden die Messwerte einer Vielzahl von unterschiedlichen Produktionsparametern bereitgestellt und hierfür z.B. erfasst. Insbesondere kann eine kontinuierliche Messung bzw. Erfassung des mindestens einen Produktionsparameters durchgeführt werden. Es versteht sich, dass auch diskrete Messungen, beispielsweise in vorgebbaren periodischen Abständen, durchgeführt werden können.

Der mindestens eine erfasste Produktionsparameter kann an die Datenverarbeitungseinrichtung 20 übergeben werden. Vorzugsweise werden eine Vielzahl an Produktionsparametern erfasst und die entsprechenden Messwerte an die Datenverarbeitungseinrichtung 20 übertragen.

Die Datenverarbeitungseinrichtung 20 kann eine Datenbank 22 umfassen. Bei der Datenbank 22 kann es sich vorzugsweise um eine Datenbank zur Echtzeitspeicherung bzw. Live-Speicherung handeln. Es versteht sich, dass eine Datenbank 22 auch entfernt und über geeignete Kanäle mit der Datenverarbeitungseinrichtung 20 gekoppelt sein kann und/oder mehrere Datenbänke 22 vorgesehen sein können. Die empfangenen Messwerte des mindestens einen Produktionsparameters und der mindestens eine Fehlerparameter können in der Datenbank 22 gespeichert werden.

Neben der Datenbank 22 kann die Datenverarbeitungseinrichtung 20 Prozessoren, Speichermittel, Schnittstellen und dergleichen aufweisen. Die Datenverarbeitungseinrichtung 20 ist insbesondere derart konfiguriert, dass aus den gespeicherten Messwerten des mindestens einen Produktionsparameters und aus dem mindestens einen Fehlerparameter mindestens ein Steuerparameter abgeleitet wird. Nachfolgend wird mit Hilfe von Figur 2 die bevorzugt automatische Ableitung von mindestens einem Steuerparameter beschrieben.

Vorzugsweise können eine Vielzahl an Steuerparametern abgeleitet und verändert werden. Die neuen Steuerparameter können dann von der Datenverarbeitungseinrichtung 20 an die Steuereinrichtung 14 übertragen und automatisch von dieser umgesetzt werden. Es versteht sich, dass die Steuereinrichtung 14 auch in der Datenverarbeitungseinrichtung 20 integriert sein kann.

Figur 2 zeigt ein Flussdiagramm eines bevorzugten Ausführungsbeispiels eines Verfahrens gemäß der vorliegenden Erfindung.

In einem ersten Schritt 201 kann der Gießprozess in herkömmlicher Weise gestartet und die Gießprozessvorrichtung 4, insbesondere die Gießanlage 4, hochgefahren werden. Insbesondere kann der Gießwerkstoff 10, wie beispielsweise Aluminium, mit einer vorgebbaren Temperatur bereitgestellt werden. Ferner können Kernwerkstoffe 12 und dergleichen bereitgestellt werden. Die Gießanlage 4 wird mittels der Steuereinrichtung 14 gesteuert. Hierbei können Steuerparameter gemäß einer vorgebbaren Starteinstellung vorgegeben sein.

Vorzugsweise kann in einem nächsten Schritt 202 ein erstes Bauteil 6 gegossen werden. Während des Gießprozesses kann eine Vielzahl an Messwerten mindestens eines Produktionsparameters durch die Erfassungseinrichtung 16 erfasst werden. Beispielsweise kann die Umgebungstemperatur, die Temperatur des Gießwerkstoffs, die Temperatur eines Kerns, der Zustand des Werkzeugs, die Kühlleistung, die Heizleistung, die Erstarrungszeit, die Taktzeit, eine Werkzeugstörung, ein Drehparameter, etc. erfasst werden. Insbesondere können eine Vielzahl dieser Produktionsparameters, bevorzugt sämtliche Produktionsparameters, beispielsweise durch geeignete Sensoren der Erfassungseinrichtung 16 erfasst werden. Um eine möglichst genaue Überwachung des Gießprozesses zu erzielen, können die Produktionsparameter kontinuierlich erfasst werden. Es versteht sich, dass auch eine periodische Erfassung durchgeführt werden kann.

Die erfassten Produktionsparameter können in einem nächsten Schritt 203 in einer Datenbank 22 bevorzugt in Echtzeit gespeichert werden. Es versteht sich, dass die Schritte 202 und 203 im Allgemeinen parallel durchgeführt werden.

In einem nächsten Schritt 204 kann das hergestellte Bauteil 6 durch die zweite Erfassungseinrichtung 18 überprüft werden. Insbesondere kann überprüft werden, ob das hergestellte Bauteil 6 fehlerhaft ist. Wird ein fehlerhaftes Bauteil 6 detektiert, so wird zumindest ein Fehlerparameter des Fehlerbilds des Bauteils 6 erfasst und an die Datenverarbeitungseinrichtung 20 übermittelt. Beispielsweise kann die Fehlerposition, die Fehlerart und/oder die Fehlergröße erfasst werden. Vorzugsweise können sämtliche Fehlerparameter erfasst und an die Verarbeitungseinrichtung 20 übertragen werden. Es versteht sich auch hier, dass dieser Schritt 204 parallel zu Schritt 202 und/oder Schritt 203 durchgeführt werden kann.

In einem nächsten Schritt 205 kann dann eine automatische Analyse der erfassten und gespeicherten Daten mittels der Datenverarbeitungseinrichtung 20 durchgeführt werden, um mindestens einen Steuerparameter anzupassen. Es versteht sich, dass dieser Schritt 205 parallel zu Schritt 202 und/oder Schritt 203 und/oder 204 durchgeführt werden kann.

Insbesondere kann in dem Schritt 205 die in der Datenbank 22 gespeicherten Messwerte des einen oder der mehreren Produktionsparameter und der mindestens eine Fehlerparameter statistisch überprüft werden. Bei der statischen Überprüfung kann vorzugsweise nach Auffälligkeiten bzw. Abweichungen gesucht werden. Insbesondere kann nach einer Abweichung der gespeicherten Messwerte während des Produktionsprozesses des fehlerhaften Bauteils 6 gesucht werden. Beispielsweise kann nach Abweichung von Parameterwerten während der Produktion des fehlerhaften Bauteils 6 im Vergleich zu den Messwerten während der Produktion fehlerfreier Bauteile 6 gesucht werden. So kann sich ein Temperaturparameter bei der Produktion des fehlerhaften Bauteils 6 gegenüber der Produktion fehlerfreier Bauteile verändert haben. Beispielsweise kann sich die Umgebungstemperatur erhöht haben.

In einem nächsten Schritt 206 kann dann mindestens ein Steuerparameter aus der vorherigen Analyse bevorzugt automatisch abgeleitet werden. Bei einer Erhöhung der Umgebungstemperatur kann beispielsweise die Heiz- und/oder Kühlleistung automatische angepasst werden. Eine weitere Möglichkeit ist die Erstarrungszeit anzupassen. Der geänderte oder die geänderten Steuerparameter können an die Steuereinrichtung 14 übergeben werden. Der mindestens eine geänderte Steuerparameter kann von der Steuereinrichtung 14 direkt umgesetzt werden. Gleichzeitig kann im Schritt 206 der mindestens eine erfasste Fehlerparameter abgespeichert werden.

Es versteht sich, dass weitere Korrelationen und Häufigkeiten von Fehlerparametern und Messwerte von Produktionsparameter abgespeichert werden können, aus denen wiederum Steuerparameter zur Reduzierung von Ausschussbauteilen abgeleitet werden können.

Das Verfahren kann mit Schritt 202 fortgesetzt werden. Wie bereits beschrieben wurde werden sämtliche Schritte 202 bis 206 bevorzugt zumindest teilweise parallel durchgeführt. Eine zeitnahe und aufwandsarme Anpassung der Steuerung ist möglich. Die Ausschussrate kann signifikant reduziert werden.

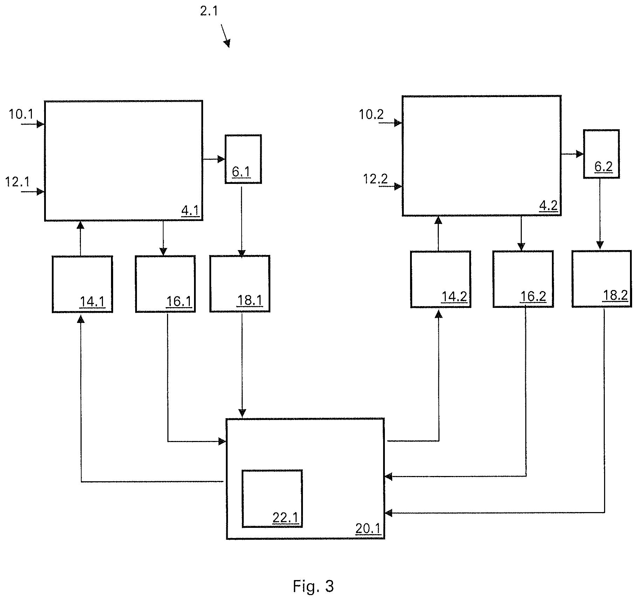

Figur 3 zeigt eine weitere vereinfachte Ansicht eines zweiten Ausführungsbeispiels eines erfindungsgemäßen Gießanlagensystems 2.1. Wie der Figur 3 zu entnehmen ist, sind zwei Gießprozessvorrichtungen 4.1 und 4.2 in Form von zwei Gießanlagen 4.1 und 4.2, zwei erste Erfassungseinrichtungen 18.1 und 18.2, zwei optionale zweite Erfassungseinrichtungen 16.1 und 16.2 sowie zwei Steuereinrichtungen 14.1 und 14.2 vorgesehen.

Ferner kann für die erste Gießanlage 4.1 ein Gießwerkstoff 10.1 und ein Kernwerkstoff 12.1 zur Herstellung von Bauteilen 6.1 zur Verfügung gestellt werden. Für die zweite Gießanlage 4.2 kann ein Gießwerkstoff 10.2 und ein Kernwerkstoff 12.2 zur Herstellung von Bauteilen 6.2 zur Verfügung gestellt werden.

Die Steuereinrichtungen 14.1, 14.2 sowie die Erfassungseinrichtungen 16.1, 16.2, 18.1 und 18.2 sind mit einer zentralen Datenverarbeitungseinrichtung 20.1 gekoppelt, die bevorzugt eine zentrale Datenbank 22.1 umfasst. Sämtliche erfasste Parameter können zentral verarbeitet, abgespeichert und/oder analysiert werden. Insbesondere können aus den bereitgestellten Messwerten der Produktionsparameter und dem einen Fehlerparameter mindestens ein Steuerparameter für die erste Gießanlage 4.1 und/oder zweite Gießanlage 4.2 abgeleitet werden. Bevorzugt können in einfacher Weise Analyseergebnisse einer Gießanlage für zwei oder mehr Gießanlagen genutzt werden.

Es versteht sich hierbei, dass die Gießanlagen und/oder die Datenverarbeitungseinrichtung entfernt voneinander positioniert sein können. Ferner versteht es sich, dass mehr als zwei Gießanlagen zentral steuerbar durch eine zentrale Datenverarbeitungseinrichtung mit mindestens einer Datenbank vorgesehen sein können.

## Patentansprüche

1. Verfahren zum Steuern mindestens einer Gießanlage (4,4.1,4.2), wobei während eines Gießprozesses eine Vielzahl von Bauteilen (6, 6.1, 6.2) hergestellt wird, umfassend:
- Bereitstellen einer Vielzahl von Messwerten von mindestens einem Produktionsparameter des Gießprozesses in einer Datenbank (22, 22.1),
- Überprüfen der hergestellten Vielzahl von Bauteilen (6, 6.1,6.2),
- wobei mindestens ein Fehlerparameter eines Fehlerbilds eines fehlerhaften Bauteils (6, 6.1, 6.2) erfasst wird,
- wobei der mindestens eine Fehlerparameter eine Fehlerart, eine Fehlerposition oder eine Fehlergröße ist,
- Ableiten mindestens eines Steuerparameters zum Steuern der mindestens einen Gießanlage (4, 4.1, 4.2) aus dem mindestens einen Fehlerparameter und der bereitgestellten Vielzahl von Messwerten von dem mindestens einen Produktionsparameter,
- wobei der mindestens eine Steuerparameter zumindest bei Erfassung eines Fehlerparameters durch eine statistische Überprüfung der Vielzahl von in der Datenbank (22, 22.1) bereitgestellten Messwerten von dem mindestens einen Produktionsparameter abgeleitet wird, und
- bei der statistischen Überprüfung nach einer Abweichung der bereitgestellten Messwerte von dem mindestens einen Produktionsparameter während der Herstellung des fehlerhaften Bauteils (6, 6.1, 6.2) im Vergleich zu den bereitgestellten Messwerten von dem mindestens einen Produktionsparameter während der Herstellung von fehlerfreien Bauteilen (6, 6.1, 6.2) gesucht wird,
- wobei bei Detektion einer Erhöhung der Umgebungstemperatur die Heizleistung der Gießanlage (4, 4.1, 4.2) und/oder die Kühlleistung der Gießanlage (4, 4.1, 4.2) automatisch angepasst wird/werden.

2. Verfahren nach Anspruch 1, **dadurch gekennzeichnet, dass** der mindestens eine erfasste Fehlerparameter in der Datenbank (22, 22.1) gespeichert wird.

3. Verfahren nach Anspruch 1 oder 2, **dadurch gekennzeichnet, dass** die bereitgestellte Vielzahl von Messwerten von dem mindestens einen Produktionsparameter während des Gießprozesses erfasst wird.

4. Verfahren nach einem der vorherigen Ansprüche, **dadurch gekennzeichnet,**
- **dass** eine Vielzahl von Messwerten von mindestens einem weiteren Produktionsparameter des Gießprozesses in der Datenbank (22, 22.1) bereitgestellt wird,
und/oder
- **dass** mindestens ein weiterer Fehlerparameter erfasst wird.

5. Verfahren nach einem der vorherigen Ansprüche, **dadurch gekennzeichnet, dass** der mindestens eine Produktionsparameter ein Zeitparameter, ein Kühlleistungsparameter, ein Heizleistungsparameter, eine Umgebungstemperatur, eine Gießanlagentemperatur, eine Kerntemperatur, eine Werkstofftemperatur oder ein Zustandsparameter der Gießanlage (4, 4.1, 4.2) ist.

6. Verfahren nach einem der vorherigen Ansprüche, **dadurch gekennzeichnet, dass** eine Korrelation zwischen einer erfassten Abweichung und dem mindestens einen Fehlerparameter in der Datenbank (22, 22.1) gespeichert wird.

7. Verfahren nach einem der vorherigen Ansprüche, **dadurch gekennzeichnet,**
- **dass** Fehlerbildkategorien vorgegeben werden, und
- **dass** die Häufigkeit eines auftretenden Fehlerbilds einer Fehlerbildkategorie in der Datenbank (22, 22.1) gespeichert wird.

8. Verfahren nach einem der vorherigen Ansprüche, **dadurch gekennzeichnet,**
- **dass** mit dem Verfahren mindestens eine weitere Gießanlage (4.2) gesteuert wird,
- wobei in der Datenbank (22.1) eine Vielzahl von Messwerten von mindestens einem Produktionsparameter des Gießprozesses der weiteren Gießanlage (4.2) bereitgestellt wird,
- wobei die durch die weitere Gießanlage (4.2) hergestellten Bauteile (6, 6.1, 6.2) überprüft werden,
- wobei mindestens ein Fehlerparameter eines Fehlerbilds eines fehlerhaften Bauteils (6,6.1,6.2) erfasst wird, und
- wobei mindestens ein Steuerparameter zum Steuern mindestens einer der zwei Gießanlagen (4.1,4.2) aus dem mindestens einen Fehlerparameter und der bereitgestellten Vielzahl von Messwerten abgeleitet wird.

9. Gießanlagensystem (2, 2.1), umfassend:
- mindestens eine Gießanlage (4,4.1,4.2) zur Durchführung eines Gießprozesses,
- mindestens eine Datenbank (22, 22.1) zum Bereitstellen einer Vielzahl von Messwerten von mindestens einem Produktionsparameter des Gießprozesses,
- mindestens eine erste Erfassungseinrichtung (18,18.1,18.2) zum Überprüfen einer Vielzahl von hergestellten Bauteilen (6, 6.1, 6.2),
- wobei die erste Erfassungseinrichtung eingerichtet ist, mindestens ein Fehlerparameter eines Fehlerbilds von mindestens einem fehlerhaften Bauteil (6, 6.1, 6.2) zu erfassen,
- wobei der mindestens eine Fehlerparameter eine Fehlerart, eine Fehlerposition oder eine Fehlergröße ist, und
- eine Datenverarbeitungseinrichtung (20, 20.1) zum Ableiten mindestens eines Steuerparameters zum Steuern der mindestens einen Gießanlage (4, 4.1,4.2) aus dem mindestens einen Fehlerparameter und der bereitgestellten Vielzahl von Messwerten von dem mindestens einen Produktionsparameter,
- wobei der mindestens eine Steuerparameter zumindest bei Erfassung eines Fehlerparameters durch eine statistische Überprüfung der Vielzahl von in der Datenbank (22, 22.1) bereitgestellten Messwerten von dem mindestens einen Produktionsparameter abgeleitet wird, und
- bei der statistischen Überprüfung nach einer Abweichung der bereitgestellten Messwerte von dem mindestens einen Produktionsparameter während der Herstellung des fehlerhaften Bauteils (6, 6.1,6.2) im Vergleich zu den bereitgestellten Messwerten von dem mindestens einen Produktionsparameter während der Herstellung von fehlerfreien Bauteilen (6, 6.1, 6.2) gesucht wird,
- wobei bei Detektion einer Erhöhung der Umgebungstemperatur die Heizleistung der Gießanlage (4, 4.1, 4.2) und/oder die Kühlleistung der Gießanlage (4,4.1,4.2) automatisch angepasst wird/werden.

10. Gießanlagensystem (2, 2.1) nach Anspruch 9, **dadurch gekennzeichnet, dass** mindestens eine zweite Erfassungseinrichtung (16, 16.1, 16.2) zum Erfassen der bereitgestellten Vielzahl von Messwerten von dem mindestens einen Produktionsparameter des Gießprozesses vorgesehen ist.

11. Gießanlagensystem (2,2.1) nach Anspruch 9 oder 10, **dadurch gekennzeichnet,**
- **dass** mindestens eine weitere Gießanlage (4.2) vorgesehen ist, wobei in der Datenbank (22.1) eine Vielzahl von Messwerten von mindestens einem Produktionsparameter des Gießprozesses der weiteren Gießanlage (4.2) bereitgestellt wird,
- **dass** mindestens eine weitere erste Erfassungseinrichtung (18.2) zum Überprüfen einer Vielzahl von durch die weitere Gießanlage (4.2) hergestellten Bauteilen (6, 6.1, 6.2) vorgesehen ist,
- wobei mindestens ein Fehlerparameter eines Fehlerbilds von mindestens einem fehlerhaften Bauteil (6,6.1,6.2) erfassbar ist, und
- wobei die Datenverarbeitungseinrichtung (22, 22.1) als eine zentrale Datenverarbeitungseinrichtung (22.1) konfiguriert ist, derart, dass mindestens ein Steuerparameter zum Steuern mindestens einer der zwei Gießanlagen (4.1,4.2) aus dem mindestens einen Fehlerparameter und der bereitgestellten Vielzahl von Messwerten abgeleitet wird.

12. Computerprogramm mit Instruktionen ausführbar auf einem Prozessor derart, dass ein Gießanlagensystem (2, 2.1) mittels des Verfahrens nach einem der Patentansprüche 1 bis 8 gesteuert wird.

13. Computerprogrammprodukt umfassend ein Computerprogramm mit Instruktionen ausführbar auf einem Prozessor derart, dass ein Gießanlagensystem (2, 2.1) mittels des Verfahrens nach einem der Patentansprüche 1 bis 8 gesteuert wird.

## Claims

1. Method for the control of at least one casting machine (4, 4.1, 4.2), wherein a plurality of components (6, 6.1, 6.2) is produced during a casting process, comprising:
- providing a plurality of measured values of at least one production parameter of the casting process in a database (22, 22.1),
- examining the produced plurality of components (6, 61, 6.2),
- wherein at least one error parameter of an error pattern of a faulty component (6, 6.1, 6.2) is detected,
- wherein at least one error parameter is an error type, an error position or an error size,
- deriving at least of one control parameter for the control of the at least one casting machine (4, 4.1, 4.2) from the at least one error parameter and the plurality of provided measured values of the at least one production parameter,
- wherein the at least one control parameter is derived at least upon detection of one error parameter through a statistical examination of the plurality of provided measured values in the database (22, 22.1) of the at least one production parameter, and
- in the statistical examination a deviation of the provided measured values of the at least one production parameter during the production of the faulty component (6, 6.1, 6.2) is sought in comparison to the provided measured values of the at least one production parameter during the production of error-free components (6, 6.1, 6.2),
- wherein upon detection of an increase in the ambient temperature the heating capacity of the casting machine (4, 4.1, 4.2) and/or the cooling capacity of the casting machine (4, 4.1, 4.2) is/are automatically adjusted.

2. Method according to Claim 1, **characterised in that** the at least one detected error parameter is stored in the database (22, 22.1).

3. Method according to Claim 1 or 2, **characterised in that** the plurality of provided measured values of the at least one production parameter is detected during the casting process.

4. Method according to any one of the preceding claims, **characterised in**
- **that** a plurality of measured values of at least one further production parameter of the casting process is provided in the database (22, 22.1),
and/or
- **that** at least one further error parameter is detected.

5. Method according to any one of the preceding claims, **characterised in that** the at least one production parameter is a time parameter, a cooling capacity parameter, a heating capacity parameter, an ambient temperature, a casting machine temperature, a core temperature, a material temperature or a status parameter of the casting machine (4, 4.1,4.2).

6. Method according to any one of the preceding claims, **characterised in that** a correlation between a detected deviation and the at least one error parameter is stored in the database (22, 22.1).

7. Method according to any one of the preceding claims, **characterised in**
- **that** error pattern categories are specified, and
- **that** the frequency of the occurrence of an error pattern of an error pattern category is stored in the database (22, 22.1).

8. Method according to any one of the preceding claims, **characterised in**
- **that** with the method at least one further casting machine (4.2) is controlled,
- wherein in the database (22.1) a plurality of measured values of at least one production parameter of the casting process of the further casting machine (4.2) is provided,
- wherein the components (6, 6.1, 6.2) produced by the further casting machine (4.2) are examined,
- wherein at least one error parameter of an error pattern of a faulty component (6, 6.1, 6.2) is detected, and
- wherein at least one control parameter for the control at least of one of the two casting machines (4.1, 4.2) is derived from the at least one error parameter and the plurality of provided measured values.

9. Casting machine system (2, 2.1), comprising:
- at least one casting machine (4, 4.1, 4.2) for conducting a casting process,
- at least one database (22, 22.1) for providing a plurality of measured values of at least one production parameter of the casting process,
- at least one first detection unit (18, 18.1, 18.2) for the examining of a plurality of produced components (6, 6.1, 6.2),
- wherein the first detection unit is configured to detect at least one error parameter of an error pattern of at least one faulty component (6, 6.1, 6.2),
- wherein the at least one error parameter is an error type, an error position or an error size, and
- a data processing unit (20, 20.1) for deriving at least one control parameter for the control of the at least one casting machine (4, 4.1, 4.2) from the at least one error parameter and the plurality of provided measured values of the at least one production parameter,
- wherein the at least one control parameter is derived at least upon detection of one error parameter through a statistical examination of the plurality of provided measured values in the database (22, 22.1) of the at least one production parameter, and
- in the statistical examination a deviation of the provided measured values from the at least one production parameter during the production of the faulty component (6, 6.1, 6.2) is sought in comparison to the provided measured values from the at least one production parameter during the production of error-free components (6, 6.1, 6.2),
- wherein upon detection of an increase in the ambient temperature the heating capacity of the casting machine (4, 4.1, 4.2) and/or the cooling capacity of the casting machine (4, 4.1, 4.2) is/are automatically adjusted.

10. Casting machine system (2, 2.1) according to Claim 9, **characterised in that** at least one second detection unit (16, 16.1, 16.2) is provided for detecting the plurality of provided measured values of the at least one production parameter of the casting process.

11. Casting machine system (2, 2.1) according to Claim 9 or 10, **characterised in**
- **that** at least one further casting machine (4.2) is provided, wherein in the database (22.1) a plurality of measured values of at least one production parameter of the casting process of the further casting machine (4.2) is provided.
- **that** at least one further first detection unit (18.2) is provided for the examination of a plurality of components (6, 6.1, 6.2) produced by the further casting machine (4.2),
- wherein at least one error parameter of an error pattern of at least one faulty component (6, 6.1, 6.2) can be detected, and
- wherein the data processing unit (22, 22.1) is configured as a central data processing unit (22.1) in such a way that at least one control parameter for the control of at least one of the two casting machines (4.1, 4.2) is derived from the at least one error parameter and the plurality of provided measured values.

12. Computer program with instructions executable on a processor in such a way that a casting machine system (2, 2.1) is controlled by means of the method according to one of Claims 1 to 8.

13. Computer program product comprising a computer program with instructions executable on a processor in such a way that a casting machine system (2, 2.1) is controlled by means of the method according to one of Claims 1 to 8.

## Revendications

1. Procédé de commande d'une installation de coulée (4, 4.1, 4.2), sachant que, pendant un processus de coulée, une pluralité de composants (6, 6.1, 6.2) est fabriqué, ledit procédé comprenant :
- la mise à disposition d'une pluralité de valeurs de mesure d'au moins un paramètre de production du processus de coulée dans une banque de données (22, 22.1),
- le contrôle de la pluralité de composants (6, 6.1, 6.2) fabriqués,
- sachant qu'au moins un paramètre de défaut d'un tableau de défauts d'un composant (6, 6.1, 6.2) défectueux est saisi,
- sachant que le paramètre de défaut au moins présent est un genre de défaut, une position erronée ou une valeur de défaut,
- la dérivation d'au moins un paramètre de commande, de l'installation de coulée (4, 4.1, 4.2) au moins présente, à partir du paramètre de défaut au moins présent et de la pluralité de valeurs de mesure disponibles du paramètre de production au moins présent,
- sachant que le paramètre de commande au moins présent est dérivé du paramètre de production au moins présent, au moins lors de la saisie d'un paramètre de défaut, par un contrôle statistique de la pluralité de valeurs de mesure mises à disposition dans la banque de données (22, 22.1), et
- qu'il est recherché lors du contrôle statistique, à la suite d'une divergence entre les valeurs de mesure disponibles du paramètre de production au moins présent, pendant la fabrication du composant (6, 6.1, 6.2) défectueux, et les valeurs de mesure disponibles du paramètre de production au moins présent, pendant la fabrication de composants (6, 6.1, 6.2) exempts de défaut,
- sachant que, lors de la détection d'une élévation de la température ambiante, la puissance calorifique de l'installation de coulée (4, 4.1, 4.2) et / ou la puissance frigorifique de l'installation de coulée (4, 4.1, 4.2) est / sont automatiquement adaptée/s.

2. Procédé selon la revendication 1,
**caractérisé en ce que** le paramètre de défaut au moins saisi est mémorisé dans la banque de données (22, 22.1).

3. Procédé selon revendication 1 ou 2,
**caractérisé en ce que** le pluralité de valeurs de mesure disponibles du paramètre de production au moins présent est saisi pendant le processus de coulée.

4. Procédé selon l'une des revendications précédentes,
**caractérisé en ce que**
- une pluralité de valeurs de mesure d'au moins un autre paramètre de production du processus de coulée est mis à disposition dans la banque de données (22, 22.1),
et / ou que
- au moins un autre paramètre de défaut est saisi.

5. Procédé selon l'une des revendications précédentes, **caractérisé en ce que** le paramètre de production au moins présent est un paramètre de temps, un paramètre de puissance frigorifique, un paramètre de puissance calorifique, une température ambiante, une température de l'installation de coulée, une température de coeur, une température de matériau ou un paramètre de fonctionnement de l'installation de coulée (4, 4.1, 4.2).

6. Procédé selon l'une des revendications précédentes, **caractérisé en ce qu'**une corrélation entre une divergence détectée et le paramètre de défaut au moins présent est mémorisée dans la banque de données (22, 22.1).

7. Procédé selon l'une des revendications précédentes, **caractérisé en ce que**
- les catégories de tableaux de défaut sont prédéterminées, et
• la fréquence d'un tableau de défauts d'une catégorie de tableaux de défauts survenant est mémorisée dans la banque de données (22, 22.1).

8. Procédé selon l'une des revendications précédentes, **caractérisé en ce que**
- au moins une autre installation de coulée (4.2) est commandée avec le procédé,
- sachant que, dans banque de données (22.1), une pluralité de valeurs de mesure d'au moins un paramètre de production du processus de coulée de l'autre installation de coulée (4.2) est mis à disposition,
- sachant que les composants (6, 6.1, 6.2), fabriqués par l'autre installation de coulée (4.2), sont contrôlés,
- sachant qu'au moins un paramètre de défaut d'un tableau de défauts d'un composant (6, 6.1, 6.2) défectueux est saisi, et
- sachant qu'au moins un paramètre de commande pour la commande d'au moins l'une des deux installations de coulée (4,1, 4.2) est dérivé du paramètre de défaut au moins présent et de la pluralité de valeurs de mesure mis à disposition.

9. Système d'installations de coulée (2, 2.1) comprenant :
- au moins une installation de coulée (4, 4.1, 4.2)) pour l'exécution d'un processus de coulée,
- au moins une banque de données (22, 22.1) pour la mise à disposition d'une pluralité de valeurs de mesure d'au moins un paramètre de production du processus de coulée,
- au moins une première installation de détection (18, 18.1, 18.2) pour le contrôle d'une pluralité de composants (6, 6.1, 6.2) fabriqués,
- sachant que la première installation de détection (18, 18.1, 18.2) est aménagée pour saisir au moins un paramètre de défaut d'un tableau de défauts d'au moins un composants (6, 6.1, 6.2) défectueux,
- sachant que le paramètre de défaut au moins présent est un genre de défaut, une position erronée ou une grandeur de défaut, et
- une installation de traitement de données (20, 20.1) pour la dérivation d'au moins un paramètre de commande de l'installation de coulée (4, 4.1, 4.2) au moins présente, à partir du paramètre de défaut au moins présent et de la pluralité disponible de valeurs de mesure du paramètre de production au moins présent,
- sachant que le paramètre de commande au moins présent est dérivé du paramètre de production au moins présent, au moins lors de la détection d'un paramètre de défaut par un contrôle statistique de la pluralité de valeurs de mesure du paramètre de production au moins présent, mises à disposition dans la banque de données (22, 22.1), et
- qu'il est recherché lors du contrôle statistique, après une divergence entre les valeurs de mesure disponibles du paramètre de production au moins présent, pendant la fabrication du composant (6, 6.1, 6.2) défectueux et les valeurs de mesure disponibles du paramètre de production au moins présent, pendant la fabrication de composants (6, 6.1, 6.2) exempts de défauts,
- sachant que, lors de la détection d'une élévation de la température ambiante, la puissance calorifique de l'installation de coulée (4, 4.1, 4.2) et / ou la puissance frigorifique de l'installation de coulée (4, 4.1, 4.2) est / sont automatiquement adaptée/s.

10. Système d'installations de coulée (2.2.1) selon la revendication 9,
**caractérisé en ce qu'**au moins une deuxième installation de détection (16, 16.1, 16.2) est prévue pour la détection de la pluralité de valeurs de mesure disponibles du paramètre de production du processus de coulée au moins présent.

11. Système de dispositifs de coulée (2.2.1) selon revendication 9 ou 10,
**caractérisé en ce que**
- au moins une autre installation de coulée (4.2) est prévue, sachant que, dans la banque de données (22.1), une pluralité de valeurs de mesure d'au moins un paramètre de production du processus de coulée de l'autre installation de coulée (4.2) sont mises à disposition,
- au moins une autre première installation de détection (18.2) est prévue pour le contrôle d'une pluralité de composants (6, 6.1, 6.2) fabriqués par l'autre installation de coulée (4.2),
- sachant qu'au moins un paramètre de défaut d'un tableau de défauts d'au moins un composants (6, 6.1, 6.2) défectueux peut être détecté, et
- sachant que l'installation de traitement de données (22, 22.1) est configurée en tant qu'installation centrale de traitement de données (22.1), de telle manière qu'au moins un paramètre de commande d'au moins l'une des deux installations de coulée (4.1, 4.2) soit dérivé à partir du paramètre de défaut au moins présent et de la pluralité de valeurs de mesure mis à disposition.

12. Programme informatique avec des instructions pouvant être exécutées sur un processeur de telle manière qu'un système d'installations de coulée (2, 2.1) soit commandé au moyen d'un procédé selon l'une des revendications 1 à 8.

13. Produit de programme informatique comprenant un programme informatique avec des instructions pouvant être exécutées sur un processeur de telle manière qu'un système d'installations de coulée (2, 2.1) soit commandé au moyen d'un procédé selon l'une des revendications 1 à 8.
